# EUROPEAN PATENT SPECIFICATION

(11) **EP 1 668 722 B1**
(45) Date of publication and mention of the grant of the patent: **21.11.2007**
(21) Application number: 04787114.0
(22) Date of filing: 09.09.2004
(51) Int. Cl.: H01M 2/36, H01M 10/12

(54) **TREATMENT SURFACE FOR BATTERY FORMING INSTALLATION.**
BEHANDLUNGSOBERFLÄCHE FÜR EINE BATTERIEFORMUNGSINSTALLATION
SURFACE DE TRAITEMENT POUR UNE INSTALLATION DE FORMATION DE BATTERIES

(30) Priority: 11.09.2003 IT VI20030170
(43) Date of publication of application: 14.06.2006
(73) Proprietor: Stocchiero, Franco, 36050 Montorso Vicentino (VI) (IT)
(72) Inventor: Stocchiero, Franco, 36050 Montorso Vicentino (VI) (IT)
(74) Representative: Bonini, Ercole
(86) International application number: PCT/EP2004/052102
(87) International publication number: WO 2005/024978

(56) References cited:
- EP-A- 0 406 464
- WO-A1-01/37363
- US-A- 3 249 132
- US-A- 4 010 780
- US-B1- 6 390 146
- PATENT ABSTRACTS OF JAPAN vol. 1998, no. 09, 31 July 1998 (1998-07-31) & JP 10 106614 A (MATSUSHITA ELECTRIC IND CO LTD), 24 April 1998 (1998-04-24)

## Description

The present invention is about a mobile treatment surface for a vertical developed battery forming installation of the kind described in Patent of Invention no. IT1307517.

According to the aforementioned invention, the accumulator forming installation comprises a plurality of pallets or support elements, in each of which the accumulators to be submitted to the formation treatment are placed.

Each of said pallets comprises current feeding means and electrolyte circulation means for each battery during the formation process.

The formation process takes place in the period in which the pallets are stored in corresponding vertically distributed supports belonging to the forming installation.

Italian Patent application no. VI2003A000099, of the same applicant, describes a method for forming acid lead batteries related to an installation comprising a plurality of pallets disposed spaced and overlapping on a structure with essentially vertical development, where a plurality of batteries is placed.

The method is essentially characterized in that the battery formation takes place with strictly constant parameters of density and temperature of the acid inside the battery during treatment.

This happens both in a stage of first circulation of a lower density acid and in a subsequent stage related to a second circulation of more concentrated acid.

The specific features of the battery formation method of Patent application no. VI2003A000099 tend to warrant a complete treatment homogeneity for each battery, so that the quality of the formed batteries is substantially the same, in order to grant a uniform lifetime of the batteries and to avoid any waste due to a bad formation of the plates present in the batteries.

It has been noted in particular that it is necessary to warrant an equal and constant flow rate of the electrolyte circulating in each cell of each battery, so that the same quantity of acid at the same temperature and density affects the forming plates in each battery.

Only in this way a perfect identity of the batteries can be granted once the treatment is finished.

An important object to be achieved in the operative stage is that the mobile support elements of the batteries under treatment, said batteries being placed at first in a load position and then stored in the forming installation during the treatment period, as well as all the conduits belonging to each of said mobile support elements, grant certain optimal performances. We make reference in particular to the fact that the acid delivery conduits have to grant, for their specific construction, a constant flow rate to each battery cell.

It is furthermore required that, because of the support mobility, the acid collecting conduits do not cause electrolyte losses during the movement of the treatment surface from a load or an unload position to a storage position.

Another object to be achieved is that the handling of the support elements in the forming installation is made easier and that the handling means of said elements are as simple as possible, so that they not increase the constructional complexity of the forming installation.

The above mentioned objects, and other which will be better highlighted in the following description, are attained by a mobile treatment surface for batteries in a battery forming installation where said treatment surface, according to the content of the main claim, comprises:
- a mainly longitudinally developed bearing surface, able to receive a plurality of batteries aligned according to said longitudinal direction;
- an acid delivery conduit, belonging to said bearing surface, for the delivery to said batteries to be formed;
- acid circulation means for each battery;
- a collecting conduit for the acid outgoing from said batteries to be formed;
- means for delivering direct current,
and it is characterized in that said delivery conduit, disposed in a substantially horizontal position, has a first internally disposed acid adduction pipe, substantially coaxial with a second acid pipe, said first pipe being provided with a plurality of radial holes for taking said acid into said second pipe, and said second pipe being provided with a plurality of outlet holes for said acid from said delivery conduit, each of said outlet holes being connected to a device for taking the acid into the battery to be formed.

Advantageously, according to the invention, special attention has been paid to manufacturing the first acid delivery conduit, which sends the acid to each battery to be formed on the same treatment surface. In fact, it has been granted that always the same acid flow rate is delivered to each battery, and in particular to each cell of the batteries to be formed.

Another characteristic of the invention is the fact that the collecting conduit for the acid outgoing from the batteries is provided with a check valve, which is normally closed during the movement of the treatment surface in order to avoid any loss of acid during the movement.

A further characteristic is the fact that the collecting conduit for the acid outgoing from the batteries of each treatment surface is vacuum operated by a pump which provides for ensuring the acid circulation in the whole plant.

Further characteristics and features of the invention will be better highlighted in the description of a preferred embodiment of the invention, given in an explanatory but not limiting way, with reference to the figures of the annexed drawings, wherein:
- Figure 1 is a basic scheme of the battery forming installation and in particular of the movement of each mobile treatment surface included in said plant;
- Figure 2 shows the mobile treatment surface of the invention;
- Figure 3 shows the delivery conduit belonging to the mobile treatment surface of the invention;
- Figure 3a is a sectional view of the conduit of Figure 3;
- Figure 4 shows the mobile treatment surface of the invention, with the batteries housed therein for performing the formation treatment; and
- Figure 5 shows a detail of the acid collecting conduit and a connection thereof to the outlet conduit.

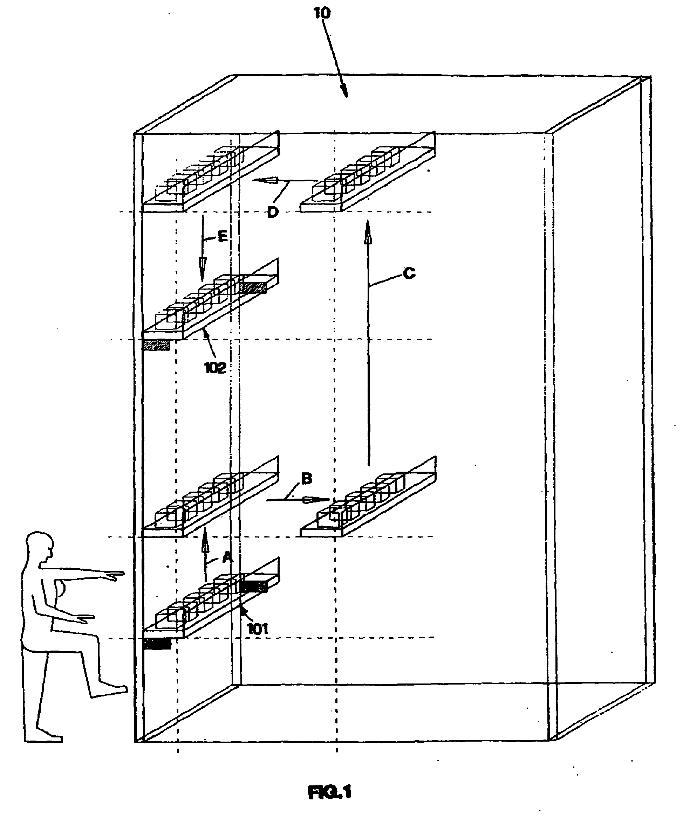

With reference to the above mentioned Figures, one can see that in the forming installation scheme of Figure 1, generally indicated with numeral **10,** the mobile treatment surface **1** is in its load position, indicated with numeral **101,** where an operator provides for connecting the batteries **2** to the acid delivery and collecting conduits, as well as the current distribution means.

Once performed said connections, the treatment surface **1** reaches the placing position, indicated with numeral **102,** starting from a load position **101,** making at first a vertical rising according to the arrow **A,** then a horizontal movement according to the arrow **B,** then a further rising according to the arrow **C,** a new translation on a horizontal plane according to the arrow **D**, and at last a lowering according to the arrow **E,** until the position **102** is reached.

The described operation is an exemplification of one of the possible movements of each mobile treatment surface, which thus passes from a battery load and arrangement position up to a placing position in a forming installation area for all the time required for performing said formation.

The vertically and horizontally directed translation of each mobile treatment plant takes place using known means, like for example pallet transfer elements belonging to the plant or substantially equivalent moving means known in the state of the art.

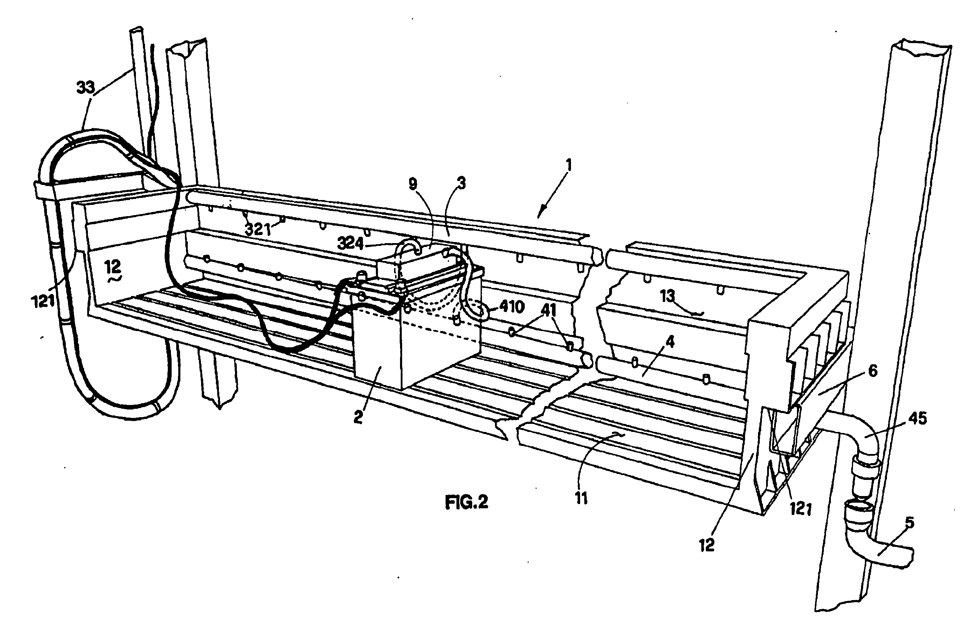

With reference to Figure 2, one can see that the mobile treatment surface **1** has a bearing surface **11** on which the batteries **2** will be disposed and subsequently placed, by means of said mobile treatment surface, in their assigned position on the forming installation.

Said mobile treatment surface has two side walls **12,** each of them being provided with a overhanging portion **121** which is adapted to lean on shelves, indicated with numeral **6,** belonging to the fixed structure of the forming installation.

The mobile treatment surface is completed by an essentially vertical bottom wall **13.**

A flexible delivery pipe **33** for the acid, connected to a delivery conduit **3** fixed on the mobile treatment surface **1**, reaches each mobile treatment surface **1**.

A further collecting conduit for the acid coming from the batteries under treatment is indicated with numeral **4** in Figure 2.

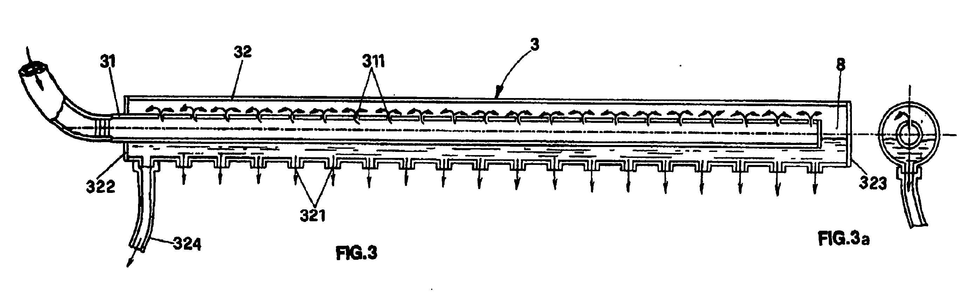

With reference to the delivery conduit, indicated with numeral **3** and better visible in Figure 3, one can see that said conduit consists of a first substantially horizontal disposed pipe **31,** having a series of holes **311,** all of the same diameter and able to eject the pressurized acid in the chamber formed in the space comprised between said first pipe **31** and a second pipe **32,** coaxial with the first one and having greater diameter, as shown in Figure 3.

The second pipe **32** too has outlet holes **321,** which are of preferably greater diameter than the holes **391** belonging to the first pipe **31.**

Since the pipe **32** has two bottom walls **322** and **323,** a collecting chamber for the acid, indicated with numeral **8,** is obtained, in which the acid forms a head with respect to the holes **321,** and from which the acid exists by gravity and thus with the same pressure at each hole **321.**

Through the pipes **324** the acid reaches the battery cells or the batteries to be supplied with the circulating acid.

One can see that the assembly shown in Figure 3, with the presence of two coaxial pipes **31** and **32,** together with the formation of a head inside the x chamber **8** comprised between the pipe **32** and the internal pipe **31,** allows to grant a constant flow rate for each intake hole of the acid to the battery. And this happens for the entire cycle of battery formation. Therefore, by means of the delivery conduit shown in Figure 3, one of the essential conditions for obtaining a constant quality in the battery formation process, that is to grant a constant flow rate of the circulating acid, is achieved.

In order to optimize the head formation inside the chamber **8** obtained between the coaxial pipes **32** and **31,** one can see that the holes **311** belonging to the pipe **31** are disposed radially aligned on the same vertical plane, and with upwardly directed acid outlet, as shown in Figure 3a, which is a sectional view of Figure 3, while the outlet holes **321** belonging to the outer pipe **32** are mutually aligned too and disposed on a vertical plane, but they are all oriented downwardly, in order to make easier the electrolyte outflow by gravity.

However, this arrangement of the holes **311** and **321** is not essential, being sufficient that the axes of said holes are not coincident.

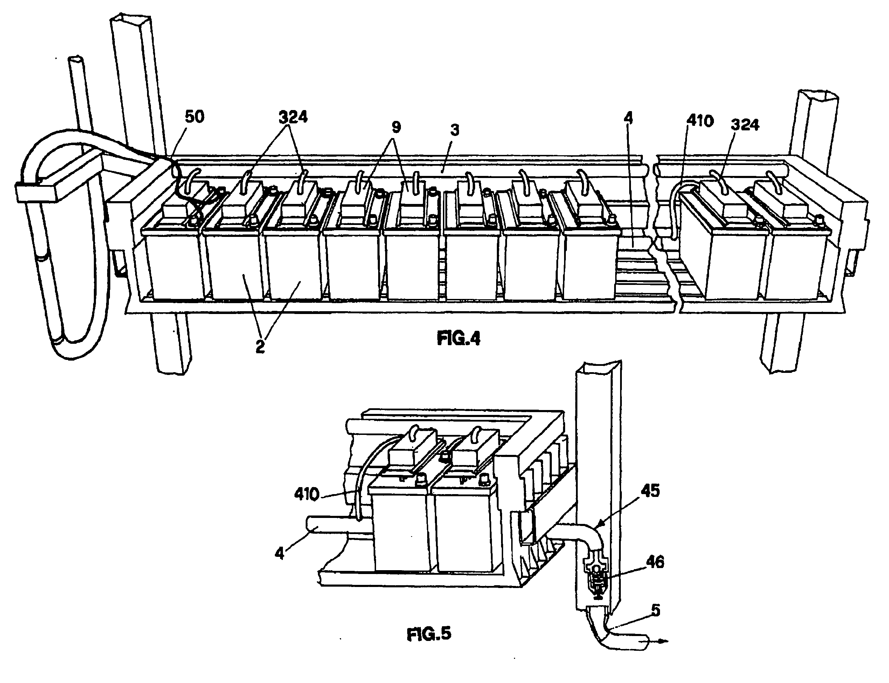

Furthermore, with reference to Figure 4, one can see that the delivery conduit **3** is connected, through delivery pipes **324,** to circulation means **9** connected to the upper cap of each battery **2** to be formed.

Circulation means **9** substantially provide for transferring the acid from the delivery conduit 3 to the battery **2.**

The acid and the gases dissolved therein outflow from the battery **2** through the tubes **410** connected to the second collecting conduit **4** by means of tubular connections **41,** visible in Figure 2.

The collecting conduit **4,** which receives the acid, and the possible gas dissolved therein, circulated inside the batteries **2,** is blind on one side and it is provided with an end portion **45** on the opposite side, consisting of a piece of pipe facing downwardly which forms the connection element to the outlet conduit **5** receiving the acid mixed with gas and sending it to the tank of the forming installation.

The outlet conduit **5** does not belong to the mobile treatment surface **1,** but it is fixed and a part of the forming installation. The attachment portion of said outlet conduit is funnel-shaped, in order to make easier the connection between the collecting conduit and the outlet conduit.

It is important to point out that the end portion of the collecting conduit **4** comprises a check valve **46,** which is preferably of spring type, normally closed when the end portion **45** of the collecting conduit is not inserted in the outlet conduit **5.**

Obviously, the valve is opened when the end portion **45** of the collecting conduit **4** is inserted in the outlet conduit **5**. This is the condition of the valve in the period in which the battery formation takes place, allowing the continuous circulation of the acid mixed with gas to and from the tank.

The presence of the valve **46** is essential and has a primary importance because, during the movement of the treatment surface, any acid loss in the forming installation is avoided.

Furthermore, a substantially easy movement is granted, also due to the fact that the sole means which are always connected to the treatment surface are the direct current feeding cables 50 and the flexible adduction cable 33 of the electrolyte to the delivery conduit **3.**

On the basis of the aforesaid description, it should be understood that the mobile treatment surface **1** for batteries of the invention achieves all the intended objects.

In particular, it is achieved the object to provide for a mobile treatment surface for batteries in which the acid delivery conduits grant a constant flow rate to each battery cell.

It is achieved the object to provide for a mobile treatment surface for batteries in which the collecting conduits of the acid and the gases dissolved therein do not cause electrolyte losses, which could request the battery deaning once the treatment is finished.

At last, it is achieved the object that the handling of the mobile treatment surfaces in the forming installation is made easier and that the handling means of said surfaces are as simpler as possible, so that they not increase the constructional complexity of the forming installation.

## Claims

1. A mobile treatment surface (1) for placing, handling and storing batteries (2) in a plant for forming said batteries, said treatment surface comprising:
- a mainly longitudinally developed bearing surface (11), able to receive a plurality of batteries aligned according to said longitudinal direction;
- an acid delivery conduit (3), belonging to said bearing surface, for the delivery to said batteries to be formed;
- acid circulation means (9) for each battery;
- a collecting conduit (4) for the acid belonging to said bearing surface and outgoing from said batteries to be formed;
- means for delivering direct current (50),
**characterized in that** said delivery conduit (3), disposed in a substantially horizontal position, has a first internally disposed acid adduction pipe (31), substantially coaxial with a second acid pipe (32), said first pipe being provided with a plurality of radial holes (311) for taking said acid into said second pipe, and said second pipe being provided with a plurality of outlet holes (321) for said acid from said delivery conduit, each of said outlet holes (321) being connected to a device (324) for taking the acid into the battery to be formed.

2. The mobile treatment surface according to claim 1), **characterized in that** said radial holes (311) have lesser diameter than said outlet holes (321).

3. The mobile treatment surface according to claim 1), **characterized in that** said radial holes (311) belonging to said first pipe (31) and said outlet holes (321) belonging to said second pipe (32) have not coincident axes.

4. The mobile treatment surface according to any of the preceding claims, **characterized in that** an acid head is present in said second pipe (32), in order to grant the same flow rate of said acid in each outlet hole.

5. The mobile treatment surface according to claim 1), **characterized in that** said collecting conduit (4) is disposed in a substantially horizontal position and comprises a plurality of tubular connections (410), an acid outlet pipe (44) from each battery to said collecting conduit being connected to each of them, said collecting conduit having a blind bottom plate (43) on one side and end portion (45) connected to an outlet conduit (5) of the acid, fixed to the structure of said forming installation, on the other side.

6. The mobile treatment surface according to claim 5), **characterized in that** said end portion (45) connected to said outlet conduit comprises an acid check valve (46), closed during the handling of said support element from the load/unload position to the stop forming position, or vice-versa.

7. The mobile treatment surface according to claim 5), **characterized in that** said collecting conduit (4) is vacuum operated by said outlet conduit by means of said end portion.

8. The mobile treatment surface according to claim 1), **characterised in that** said bearing surface (11) is delimited by two walls (12), disposed at the side ends, and by an essentially vertical bottom wall (13) connecting said side walls, said side walls being provided with bearing surfaces on shelves belonging to the structure of said plant.

9. The mobile treatment surface according to claim 8), **characterized in that** each of the walls (12) of said bearing surface (11) is provided with a overhanging portion (121) which is adapted to lean on a corresponding shelf (6) belonging to said forming installation.

## Patentansprüche

1. Eine mobile Behandlungsfläche (1) für das Positionieren, Bewegen und Lagern von Batterien (2) in einer Anlage für die Formung dieser Batterien, wobei diese Behandlungsfläche Folgendes umfasst:
- eine im Wesentlichen in Längsrichtung verlaufende Tragfläche (11), die in der Lage ist, eine Vielzahl von in dieser Längsrichtung angeordnete Batterien aufzunehmen;
- eine zu dieser Tragfläche gehörende Säureausgabeleitung (3), die die Säure zu den zu formenden Batterien leitet;
- Säurezirkulationsmittel (9) für jede Batterie;
- eine Auffangleitung (4) für die Säure, die zu der Tragfläche gehört und von den zu formenden Batterien ausgeht;
- Mittel zur Lieferung von Gleichstrom (50),
**dadurch gekennzeichnet, dass** die im Wesentlichen waagerecht positionierte Ausgabeleitung (3) ein erstes, innen angeordnetes Säurezuleitungsrohr (31) aufweist, das im Wesentlichen koaxial zu einer zweiten Säureleitung (32) steht, wobei diese erste Leitung eine Vielzahl Radialbohrungen (311) aufweist, die Säure in die zweite Leitung einfüllen, und die zweite Leitung eine Vielzahl Auslassbohrungen (321) für die Säure aus der Ausgabeleitung aufweist, wobei jede dieser Auslassbohrungen (321) an eine Vorrichtung (324) angeschlossen ist, welche die Säure in die zu formende Batterie einfüllt.

2. Die mobile Behandlungsfläche gemäß Patentanspruch 1), **dadurch gekennzeichnet, dass** die Radialbohrungen (311) einen kleineren Durchmesser haben als die Auslassbohrungen (321).

3. Die mobile Behandlungsfläche gemäß Patentanspruch 1), **dadurch gekennzeichnet, dass** die zur ersten Leitung (31) gehörenden Radialbohrungen (311), sowie die zur zweiten Leitung (32) gehörenden Auslassöffnungen (321) nicht übereinstimmende Achsen haben.

4. Die mobile Behandlungsfläche gemäß eines jeden der vorstehenden Patentansprüche, **dadurch gekennzeichnet, dass** es in der zweiten Leitung (32) einen unterschiedlichen Säurestand gibt, um in jeder Auslassbohrung die gleiche Säureflussrate zu gewährleisten.

5. Die mobile Behandlungsfläche gemäß Patentanspruch 1), **dadurch gekennzeichnet, dass** die Auffangleitung (4) in einer im Wesentlichen waagerechten Position angeordnet ist und eine Vielzahl röhrenförmiger Verbindungen (410) umfasst, wobei ein aus jeder Batterie zu der Auffangleitung führendes Säureauslassrohr (44) an jede einzelne von ihnen angeschlossen ist und wobei die Auffangleitung an einer Seite eine blinde Bodenplatte (43) aufweist und an der anderen Seite einen Endabschnitt (45), der mit einer an der Struktur der Formungsanlage befestigten Säureauslassleitung (5) verbunden ist.

6. Die mobile Behandlungsfläche gemäß Patentanspruch 5), **dadurch gekennzeichnet, dass** der mit der zur Auslassleitung verbundene Endabschnitt (45) ein Säureabsperrventil (46) umfasst, das während der Bewegung des Tragelements aus der Einfüll-/Auslassposition in die Formungs-Haltephase oder umgekehrt geschlossen ist.

7. Die mobile Behandlungsfläche gemäß Patentanspruch 5), **dadurch gekennzeichnet, dass** die Auffangleitung (4) durch die Auslassleitung mittels des Endabschnitts unter Unterdruck gesetzt wird.

8. Die mobile Behandlungsfläche gemäß Patentanspruch 1), **dadurch gekennzeichnet, dass** die Tragfläche (11) durch zwei an den Seitenenden angeordnete Wände (12) begrenzt ist, sowie durch eine im Wesentlichen senkrechte Bodenwand (13), die die Seitenwände verbindet, wobei diese Seitenwände mit Tragflächen auf zu der Struktur der Anlage gehörenden Einlegeboden versehen sind.

9. Die mobile Behandlungsfläche gemäß Patentanspruch 8), **dadurch gekennzeichnet, dass** jede der Wände (12) der Tragfläche (11) mit einem überstehenden Abschnitt (121) versehen ist, der geeignet ist, auf einem entsprechenden, zur Formungsanlage gehörenden Einlegeboden (6) aufzuliegen.

## Revendications

1. Une surface de traitement mobile (1) pour la disposition, le déplacement et pour l'entreposage de batteries (2) dans une installation pour la formation desdites batteries, ladite surface de traitement comprenant:
- une surface d'appui (11) principalement à développement longitudinal apte à recevoir une pluralité de batteries alignées selon ladite direction longitudinale;
- une conduite de refoulement (3) de l'acide, appartenant à ladite surface d'appui pour la distribution auxdites batteries à former ;
- des moyens de circulaion (9) de l'acide pour chaque batterie;
- une conduite collectrice (4) pour l'acide appartenant à ladite surface d'appui et sortant desdites batteries à former;
- des moyens pour la distribution de courant continu (50),
**caractérisée en ce que** ladite conduite de refoulement (3), se trouvant dans une position essentiellement horizontale, présente un premier tuyau d'adduction de l'acide (31) disposé à l'intérieur et essentiellement coaxial avec un deuxième tuyau de l'acide (32), ledit premier tuyau étant équipé d'une pluralité de trous radiaux (311) pour l'introduction dudit acide dans ledit deuxième tuyau, et ledit deuxième tuyau étant équipé d'une pluralité de trous de sortie (321) dudit acide de ladite conduite de refoulement, chacun desdits trous de sortie (321) étant relié à un dispositif (324) pour l'introduction de l'acide dans la batterie à former.

2. La surface de traitement mobile selon la revendication 1), **caractérisée en ce que** lesdits trous radiaux (311) ont un diamètre inférieur par rapport à celui desdits trous de sortie (321).

3. La surface de traitement mobile selon la revendication 1), **caractérisée en ce que** lesdits trous radiaux (311) appartenant audit premier tuyau (31) et ledits trous de sortie (321) appartenant audit deuxième tuyau (32) ne présentent pas des axes coïncidents.

4. La surface de traitement mobile selon une quelconque des revendications précédentes, **caractérisée en ce qu'**un niveau différent d'acide est présent dans ledit deuxième tuyau (32), pour garantir le même débit dudit acide dans chaque trou de sortie.

5. La surface de traitement mobile selon la revendication 1), **caractérisée en ce que** ladite conduite collectrice (4) est située dans une position essentiellement horizontale et comprend une pluralité de raccordements tubulaires (410), un tuyau de sortie de l'acide (44) de chaque batterie à ladite conduite collectrice étant relié à chacun de ceux-ci, ladite conduite collectrice ayant une plaque de fond aveugle (43) d'un côté et une partie finale (45) reliée à une conduite de sortie (5) de l'acide, fixé à la structure de ladite installation de formation, de l'autre côté.

6. La surface de traitement mobile selon la revendication 5), **caractérisée en ce que** ladite partie finale (45) reliée à ladite conduite de sortie comprend un clapet de non-retour de l'acide (46), fermé durant le déplacement dudit élément de support de la position de chargement/déchargement à la position d'arrêt pour la formation, ou vice versa.

7. La surface de traitement mobile selon la revendication 5), **caractérisée en ce que** ladite conduite collectrice (4) est commandée par dépression par ladite conduite de sortie au moyen de ladite partie finale.

8. La surface de traitement mobile selon la revendication 1), **caractérisée en ce que** ladite surface d'appui (11) est délimitée par deux parois (12), disposées aux extrémités latérales, et par une paroi de fond (13) essentiellement verticale reliant lesdites parois latérales, lesdites parois latérales étant équipées de surfaces d'appui sur des tablettes appartenant à la structure de ladite installation.

9. La surface de traitement mobile selon la revendication 8), **caractérisée en ce que** chaque paroi (12) de ladite surface d'appui (11) est munie d'une partie en saillie (121) apte à s'appuyer sur une tablette correspondante (6) appartenant à ladite installation de formation.
